Europäisches Patentamt

European Patent Office

Office européen des brevets

(11) Publication number: **0 317 699**

**A2**

# (12) EUROPEAN PATENT APPLICATION

(21) Application number: **88106500.7**

(22) Date of filing: **22.04.88**

(51) Int. Cl.⁴: **B29B 17/00**

(30) Priority: **27.11.87 IT 370787**

(43) Date of publication of application:
**31.05.89 Bulletin 89/22**

(84) Designated Contracting States:
**AT BE CH DE ES FR GB GR LI LU NL SE**

(71) Applicant: **GOVONI SPA**
**Via Giorgi 27**
**Modena(IT)**

(72) Inventor: **Gulmini, Carlo**
**Via Ex-Dogana 7**
**Casumaro (Ferrara)(IT)**

(74) Representative: **Sassatelli, Franco T., Dr.**
**c/o INIP via Ruggi 5**
**I-40137 Bologna(IT)**

(54) **System for recovering, selecting and recycling reject plastic containers.**

㊼ In a first sequence, the container (4) passes on door (2) which opens when a certain impulse value is overcome in order to exclude material of different type, while the accepted product touches a micro-switch (9) which, beside counting it, activated a warming device to low in hot air from special doors (14) on the same material which is thus softened. The container is then pushed by a singulizer-ingulfing device with a swinging level (15) between a motor driven (18) which is heated by means of armoured candle-shaped resistances (21) with tension supplied by sliding contacts (22) to carry out a compact and permanent pressing by means of pressing-welding points and another inertia roller (19). The knives (24) fitted on the perphery of the two rollers, in outlet ensure the disjonction. For the selection phase, the recovered bodies (29), coming from the first sequence through a hopper (30), fall on the feeding system with vibrating canals, which lets them in a singularizing band (31) with separator (33), where photocells (34) are checking that no superpositions occur. The recovered bodies then arrive in a screened radiation zone (35) where an X-ray source (36), properly modulated, sends the rays which are partially absorbed by the recovery bodies (29); this allows a sensor (37), which takes the arrived quantity of energy, to determine the typology of the same body. A device fitted with a micropro- cessor (38) then carries out the elaboration of the signal arrived from the multipoint sensor (37) and determines the direction into which the recovered body (29) is to be sent and discharged by means of two ribbons (40 and 41).

## System for recovering, selecting and recycling reject plastic containers.

The invention refers to a complete operation cycle with enables to recycle empty containers, brought back by the users to the distribution points of the products, by stowing the relevant recovered containers which have been singularly compacted and arranged in advance, duly selected according to their materials, in packages to send to recovering. The feeder calculates, on a detachable label, the number of the containers that have been introduced into the unit forming the recovered compacted bodies and, by using a recovery unitary value, ordered in advance, which has been given to them, reckons the total amount due to the lot of the introduced containers. This recovery value can be used in different ways to act as incentive on the return of the waste containers either from the user's or the distributor's side.

At present, the considerable encumbrance caused by these containers determines unsustainable stowing and transport costs which do not allow their recovering. Consequently, they considerably increase the rubbish volume and turn out to be polluting in the burners, particularly on account of the dioxine which is developed when burning them.

The fundamental solution of the problem has been carried out and pro tected by means of the Italian Patent Application no. 3570A/87 of the same Applicant of the present European Application, which substantially foresees the transformation, by means of squeezing and press-soldering, of the reject plastic material containers in compacted recovery bodies. In comparison with the above Italian Patent Application no. 3570A/87, the invention system carries out the following improvements: a selection system of the containers according to the weight, which allows to eject the not conforming containers, such as those of glass or metal, a warming device which works on the containers in a pre-squeezing position, softening it thus in order to increase its compacting and, therefore, the density of the recovery object and to reduce it to the minimum encumbrance, a selection system for plastic typology of the above said recovered object, and at last a device for sending the selected ones to sacking ready for the direct re-use.

The new system foresees two operation phases, the first one of which brings the recovered not selected containers into bags, whereas the second phase carries out the selection of these parts, thus preparing them in advance for the direct producing re-employ. The employ rationality allowed by the present system is due to the fact that the structural transformation of the container in plastic material carried out by the first operating sequence, brings to a recovered body having an encumbering volume tending to the one of the original material, which condition makes accessible the stocking and transport costs for the re-employ.

The first operation sequence uses a machine with feeder consisting of an opening 1 with door 2 and other side doors 3, through one which the container in plastic materials 3 is introduced, which is gravitationally discharged into the access duct 5. To allow that other kinds of containers, such as glass one, are eliminated, a weight selecting device is foreseen on their travel. When the descend ing containers impulse exceeds a value fixed in advance, a trap door 7 on hinge 6 is opened on its passage and its expulsion is thus allowed into an underlying drawing seat, and microswitch 8 is activated which emits a warning signal. Should the container be of accepted material, it contacts microswitch 9, which beside counting its, activates a warming device which softens it for pressing. This heating device employs fans 11 in feeding ducts 10 symmetrically fitted on the sides of the pressing assembly, for sucking previously heated air, by means of resistance assemblies 13, from grills 11 and insuffle it from counterposed openings 14 into the feeding duct on the container before pressing. At the end of its descent in the access canal, the container is pushed into the pressing zone by a flooder-singularizer, the task of which is to bring the above container between the rollers, thus avoiding interferences between the one to press and the subsequent one.

The pressing device uses a swinging lever 15 driven by the roller motorization through proper throwing to a swinging block. This level 15 swings aroung hinge 16 and employs a leaning shelf 17. The softened container passes through the motor-driven pressing rolls 18 and the inertia ones 19. Roll 18 is fitted with proper press-soldering reliefs 20 which allow compacting with permanent trim maintening of the recovered part. The said press-soldering is performed because the roller 18 is heated by means of candle-shaped armoured resistances 21 to which tension is supplied through sliding contacts 22. The above roller 18 is driven by a special motor-reducer 23. The relaim parts are served by knives 24 fitted on the periphery of the two rollers. The reclaim parts are then discharged into bag 25 which can be taken away by pressors 26 binding the hanging suports 27, and can be taken away by opening lid 28.

The second sequence of operations for selecting the containers is based on the recognition of the typology of the plastic material the container is consisting of This selection is carried out by besprinkling X-rays from a relevant source and by noticing their absorption by the container. The recovered parts 29 coming from the first operation sequence are discharged by a hopper 30 on a feeding system 31 with vibrating canals which lets them on a singularization belt 32 with separators 33, while a system of photocells 34 checks that no superposition occurs. These parts then pass into a screened irradiation zone 35 when a source of X-rays 36, properly modulated, sends the rays which are partially absorbed by them. By picking the quantity of the arrived energy, a sensorium 37 determines the typology of the plastic material the examined recovery part is consisting of. A microprocessor device 38 then elaborates the signal arriving from the moultipoint sensorium 37 and determines the direction in which the recovered part is to be sent. The switch 39, properly positioned by the microprocessor control 38, conveys the analized recovered part to discharge by means of one of the two sending belts 40 and 41.

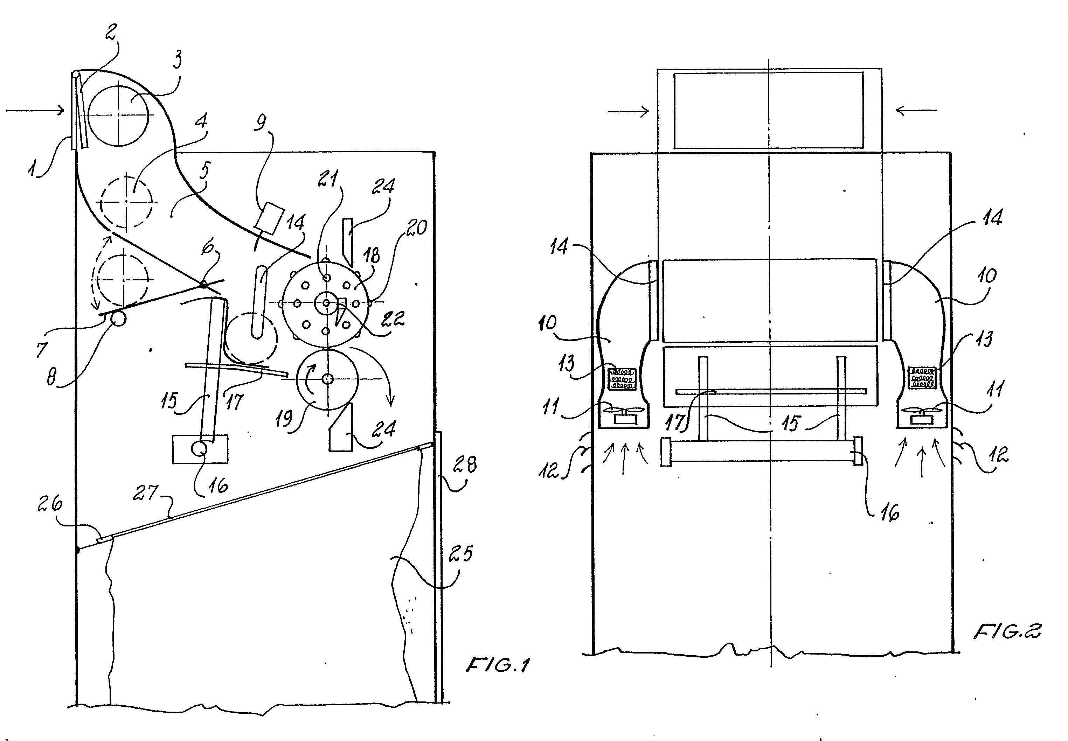

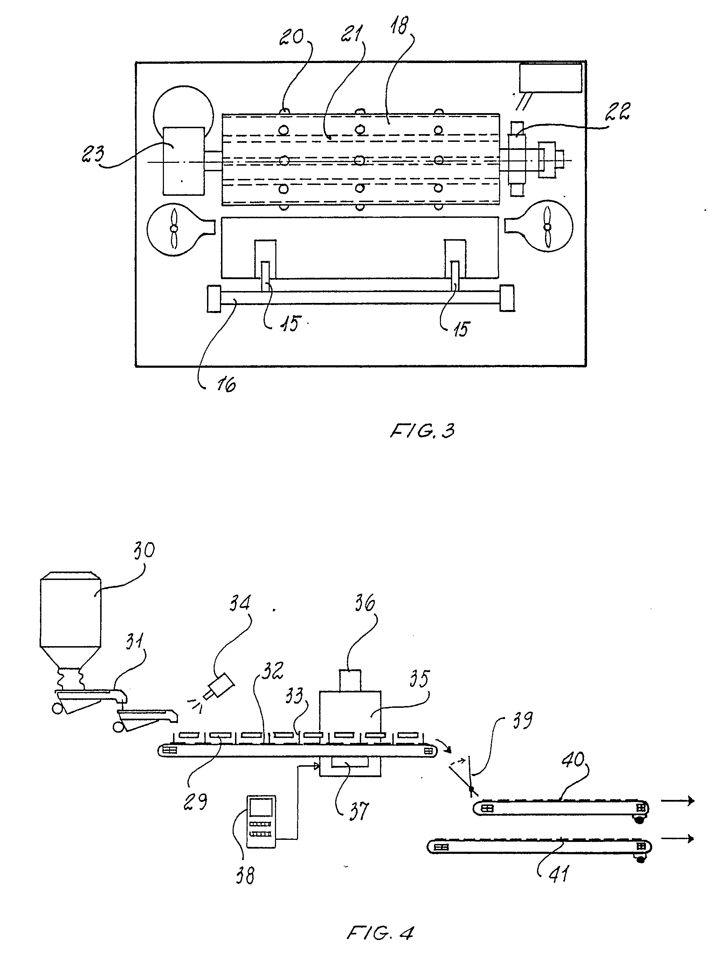

An execution form of the system is illustrated in an indicative way in the drawings of tables 1 and 2. With reference to table 1, fig. 1 is the section view of the operative compartment which carries out the recovery parts, whereas fig. 2 is the view dephased by 90° to point out the warming device. In table 2, fig. 3 the same warming device is seen from above, while fig. 4 is the schematic view of the selection proceeding for the recovered parts.

In carrying out, the structure components, the devices, the materials and anything els in this connection may be foreseen in different ways.

## Claims

1) System for recovering, selecting and recycling reject plastic containers, which foresees a first operation sequence carrying out the container squeezing. This sequence employs a unit with an input device consisting of a lid (2) opening (1) and other side opening (3), through one of which the plastic container (4) is introduced and discharged in the access duct (5). In order to eliminate containers of other kinds, a selecting-weighting device is foreseen. When the impulse given by the sinking container exceeds a value established in advance, a folding door (7) or hinge (6) opens and enables its throwing down into a drawing seat, and microswitch (8) is activated which emits an alarm signal. If the container is of an accepted material, it contacts a microswitch (9) which, besides numbering it, activates a heating device which softens it for pressing. In feeding ducts (10), symmetrically fitted on the sides of the pressing assembly, the above mentioned pressing device employs the fans (11) which suck air previously heated by the resistance assembly (13) from grids (12) and insufflate it from counter-fitted openings (14) into the feeding duct on the container before pressing it. At the end of the descent in the access channel, the container (4) is pushed between the pressing rollers by a singularizing-chocking device which avoids interferences between the object to press and to following one. The device employs a swinging lever (15) driven by the motorization of the rollers through proper conveying with a swinging glyph. The above level (15) swings around a hinge (16) and employs a leaning bracket (17). The softened container passes between the pressing rollers, of which one is motor-driven (18), while the other is an inertia one (19). The motor-driven roller (18) is fitted with proper press-soldering reliefs (20 which allow to compact the recovered part. This press-welding operation is performed because the roller itself (18) is heated by means of cuirassed candle shaped resistances (21) to which tension is supplied by sliding contacts (22).

The above motor-driven roller (18) is started by an expressly made motor-reducer (23). The recovered parts are detached by the knives (24) fitt ed on the periphery of the two rollers; the recovered parts are then discharged into a bag (25) to extract by means of binding pressing device (26) of the hanging supports (27) and taken away by mean of door opening (28).

2) System for recovering, selecting and recycling reject plastic containers, characterized by the fact that the recovered parts (29) coming from pressing pass through a selection phase. From a hopper (30), these parts arrive on a feeding system (31) with vibrating ducts which puts them on a singularizing ribbon (32) with separators (33), while a photocell system (34) checks that no superpositions occur. The parts then pass into a screened irradiation zone (35) where a properly modulated X-ray source (36) sends the rays which are partially absorbed by the same part. By picking the quantity of the arrived energy, a sensor (37) determines the typology of the material the recovered part consists of. A device with microprocessor (38) then carries out the signal elaboration coming from the multipoint sensor (37) and determines the direction into which the recovered part is to be sent.

3) System for recovering, selecting and recycling reject plastic containers, as per claim 2, characterized by the fact that, after the selection, a switch (39) properly positioned by the microprocessor (38) control, conveys the analysed recovered part to discharge by means of one of the two conveying ribbons (40 and 41).

4) System for recovering, selecting and recycling reject plastic containers, as per claim 1) characterized by the fact that the feeder calculates the number of the containers inserted into the unit, on a detachable card, and which form the recovery compact blocks, and using a unitary value established for them in advance, reckons the total amount due for the lot of containers put into the unit.

FIG.1

FIG.2

EP 0 317 699 A2

FIG. 3

FIG. 4